# EUROPEAN PATENT APPLICATION

(11) **EP 3 872 369 A1**
(43) Date of publication of application: **01.09.2021**
(21) Application number: 20853589.8
(22) Date of filing: 26.03.2020
(51) Int. Cl.: F16H 55/18, F21V 14/00

(54) **PRECISION GEAR TRANSMISSION MEMBER, AND STAGE LAMP HAVING SAME**

(30) Priority: 24.12.2019 CN 201911345315
(71) Applicant: Guangzhou Haoyang Electronic Co., Ltd., Guangzhou, Guangdong 511450 (CN)
(72) Inventor: The designation of the inventor has not yet been filed
(74) Representative: Canzler & Bergmeier Patentanwälte Partnerschaft mbB
(86) International application number: PCT/CN2020/081501
(87) International publication number: WO 2021/128622

(57) **Abstract**

The present invention discloses a precision gear transmission component and a stage light with the same. The precision gear transmission component includes a first gear and a second gear which mesh with each other. The first gear includes a first wheel and a second wheel. Gear teeth of the first wheel and gear teeth of the second wheel are misaligned with each other, and meshed with the second gear. Since the first gear and the second gear of the precision gear transmission component mesh with each other, and the first gear includes the first wheel and the second wheel, the first wheel or the second wheel is rotated as needed, so that the gear teeth of the first wheel and the gear teeth of the second wheel are staggered with each other, until meshing accuracy of the first gear and the second gear reaches an optimal state, and then is locked, so as to realize a precision transmission of the precision gear transmission component.

## Description

### TECHNICAL FIELD

The present invention relates to the technical field of stage light, and in particular, to a precision gear transmission component and a stage light with the same.

### BACKGROUND

During the work of a stage light, it is often necessary to rotate a light head to adjust an emergent direction of a light beam, and an internal effect element also needs motion to project a variety of gorgeous effects. Since the light beam projected by the stage light generally has long distance, even if a rotation angle of the light head has a slight error, it will cause a large deviation in the final projection position, and a light spot finally projected is generally many times larger than a light outlet of the stage light. Therefore, if the motion position of the effect element is not in place, it will also significantly affect a light effect of the stage light. An existing transmission component generally uses gear transmission or synchronous belt transmission or a mixture of the two, but they all have the problem of limited accuracy and cannot accurately control the movement of a corresponding component to a preset position.

### SUMMARY

In order to overcome at least one of the above-mentioned defects in the prior art, the present invention provides a precision gear transmission component and a stage light with the same, which achieves more accurate transmission and can make light control of the stage light more accurate compared with the existing transmission component.

In order to solve the above-mentioned technical problems, the present invention adopts the following technical solutions. A precision gear transmission component includes a first gear and a second gear which mesh with each other. The first gear includes a first wheel and a second wheel. Gear teeth of the first wheel and gear teeth of the second wheel are misaligned with each other, and meshed with the same second gear.

Since the first gear and the second gear of the precision gear transmission component mesh with each other, and the first gear includes the first wheel and the second wheel, the first wheel or the second wheel is rotated as needed, so that the gear teeth of the first wheel and the gear teeth of the second wheel are staggered with each other, until meshing accuracy of the first gear and the second gear reaches an optimal state, and then is locked, so as to realize a precision transmission of the precision gear transmission component. The precision gear transmission component can be sold and used as a whole, or sold separately, and matched and adjusted by a user during use.

Further, a center of the first wheel and a center of the second wheel are pivotally connected to each other. When rotating the first wheel or the second wheel, the first wheel and the second wheel will not slide and cause displacement, which is convenient for adjusting a misalignment angle between the gear teeth of the first wheel and the gear teeth of the second wheel.

Further, the center of the first wheel is fixed with a stationary shaft, the center of the second wheel is provided with a through hole, and the second wheel is sleeved on the stationary shaft. The second wheel rotates arounds the stationary shaft.

Further, a misalignment angle between the first wheel and the second wheel is adjustable. During the work of the precision gear transmission component, if the first wheel and the second wheel of the first gear are worn or the misalignment angle changes, the adjustment and correction can be performed again, the second wheel is rotated to maintain the optimal misalignment angle between the first wheel and the second wheel, ensuring the transmission accuracy of the precision gear transmission component. In addition, the misalignment angle between the first wheel and the second wheel is adjustable, the second gear can be replaced at will, the misalignment angle between the first wheel and the second wheel can be readjusted, so that meshing accuracy of the first gear and the second gear reaches an optimal state.

Further, the first gear further includes an adjusting part which adjusts the misalignment angle between the first wheel and the second wheel, and a locking part which locks the first wheel and the second wheel after adjustment. The misalignment angle between the first wheel and the second wheel can be adjusted by the adjusting part, and the first wheel and the second wheel after adjustment can be locked by the locking part, facilitating adjustment of the transmission accuracy of the precision gear transmission component during use.

Further, the adjusting part includes an adjusting screw, a threaded hole arranged at the first wheel and an adjusting hole arranged at the second wheel. The adjusting screw includes a first screw and a first screw head. The first screw is connected to the threaded hole and a width of the adjusting hole is greater than a width of the first screw. One side of the first screw head abuts against the adjusting hole, and an active gap is provided between the other side of the first screw head and a side wall of the adjusting hole. During rotation of the adjusting screw, the first screw head drives the second wheel to rotate, and the active gap increases or decreases accordingly. Since the first screw of the adjusting screw is threadedly connected to the second wheel, when the adjusting screw is screwed, a position of the adjusting screw relative to the second wheel will not change. Since the width of the adjusting hole is greater than the width of the first screw, and one side of the first screw head abuts against the side wall of the adjusting hole, and the active gap is provided between the other side of the first screw head and the side wall of the adjusting hole, when the adjusting screw is screwed, the screw head will drive the first wheel to rotate, thereby changing the misalignment angle between the first wheel and the second wheel.

Further, a portion where the adjusting hole abuts against the first screw head and/or a portion where the first screw head abuts against the adjusting hole is an inclined plane. Using the inclined plane, the first wheel can be driven to rotate more smoothly during screwing the adjusting screw.

Further, an end of the first screw head and/or an end of the adjusting hole which is far away from the first wheel has a frustum shape. It is easy to process, and during screwing the adjusting screw, the portion where the first screw head abuts against the adjusting hole and/or the portion where the adjusting hole abuts against the first screw head is always the inclined plane, which is easy to adjust.

Further, a center line of the threaded hole and a center line of the adjusting hole are staggered with each other. Since the threaded hole is threadedly connected to the first screw, and the width of the adjusting hole is greater than the width of the first screw, the width of the adjusting hole must be greater than a width of the threaded hole. The center line of the threaded hole and the center line of the adjusting hole are staggered with each other, which can reduce a size of the adjusting hole, making it easier to process.

Further, the locking part includes a locking hole penetrating the first wheel and the second wheel, and a locking screw inserted into the locking hole. After the misalignment angle between the first wheel and the second wheel is adjusted to an ideal position, by inserting the locking screw into the locking hole for locking, the second wheel is prevented from rotating randomly.

Further, the locking hole includes a locking section located in the first wheel, and a penetrating section located in the second wheel. The locking screw includes a second screw and a second screw head. The second screw is connected to the locking section, a width of the penetrating section is greater than a width of the second screw, and the second screw head abuts against a surface of the second wheel. Since the width of the penetrating section is greater than the width of the second screw, the second wheel can rotate relative to the first wheel. Since the second screw is connected to the locking section, during rotation of the first wheel, a position of the locking screw relative to the second wheel remains unchanged. When the second screw head abuts against the surface of the second wheel, the first wheel and the second wheel can be locked to prevent the second wheel from rotating randomly.

Further, the number of the locking part is at least two. The first wheel and the second wheel are locked by at least two of the locking parts.

Further, the number of the locking part is three, and the number of the adjusting part is one. The locking parts and the adjusting part are evenly distributed around a center of the first gear, and jointly fix the first wheel and the second wheel, and the force is more balanced.

Further, any adjacent two of the second gear are meshed for transmission by the first gear, or any adjacent two of the first gear are meshed for transmission by the second gear. That is, there will not be two second gears to mesh for transmission, but at least one first gear in each step of the transmission to ensure that each step is precisely transmitted during the transmission, thereby ensuring the overall transmission accuracy.

Further, a diameter of the first gear is smaller than a diameter of the second gear. Due to a complex structure of the first gear, the diameter of the first gear is designed to be small, which facilitates production and assembly, and also facilitates the adjustment of the misalignment angle between the first wheel and the second wheel.

The present invention further provides a stage light, which includes the driving mechanism and any one of the above-described precision gear transmission component. The driving mechanism is transmitted by the precision gear transmission component. Using the precision gear transmission component, rotation of the light head or motion position of the effect element can be more accurate, and light control accuracy of the stage light can be improved.

Further, a transmission belt or a transmission gear is further provided between the driving mechanism and the precision gear transmission component. The driving mechanism transmits power to the precision gear transmission component by the transmission belt or the transmission gear, in order to select a suitable installation position of the driving mechanism, and avoid limited space or inconvenient installation at the precision gear transmission component.

Further, the precision gear transmission component is located in the light head. It drives various effect elements in the light head, or drives the light head to rotate.

Further, a swing effect element is provided in the light head. The swing effect element includes a swing arm and an effect element arranged at the swing arm. Using the swing of the swing arm, the effect element is cut in and out of a light path to produce or not produce light effects. And/or a rotary effect element is provided in the light head, and the rotary effect element includes a rotary disk and an effect element arranged at the rotary disk. Using the rotation of the rotary disk, different effect elements can be switched to enter the light path to produce different light effects.

Further, the precision gear transmission component is adopted between the swing arm and the driving mechanism for transmission, thereby precisely controlling a swing angle of the swing arm, and/or the precision gear transmission component is adopted between the rotary disk and the driving mechanism for transmission, thereby accurately controlling a rotation angle of the rotary disk, ensuring that a position where the effect element on the swing arm and/or the rotary disk intersects the light path does not deviate.

Further, the effect element is pivotally fixed, and the precision gear transmission component is adopted between the effect element and the driving mechanism for transmission. Thereby, a rotation angle of effect element is accurately controlled, so that a desired pattern can be projected in an accurate direction.

Further, the effect element is provided with a picot edge, which constitutes the first gear or the second gear in the precision gear transmission component. The effect element is driven by the picot edge, and the effect element having the picot edge is used to constitute the first gear or the second gear in the precision gear transmission component, which reduces transmission steps, so as to control the rotation angle of the effect element more accurately.

Further, a swing effect element is provided in the light head. The swing effect element includes a swing arm. The swing arm is provided with a pivot shaft. A driving wheel is provided on the pivot shaft. The driving wheel meshes with the effect element by the middle wheel. By arranging the middle wheel, it is possible to transmit between the driving wheel and the effect element, reducing a size of the driving wheel, which is convenient for saving space.

Further, the middle wheel constitutes the first gear in the precision gear transmission component. The driving wheel and the effect element constitute the second gear in the precision gear transmission component. In this way, it is possible to use only one first gear to guarantee the transmission accuracy between the middle wheel and the driving wheel and the transmission accuracy between the middle wheel and the effect element at the same time, which saves costs.

Further, a rotary effect element is provided in the light head. The rotary effect element includes a rotary disk, a sun gear arranged at a center of the rotary disk and an effect element arranged around the sun gear and meshing with the sun gear. The sun gear and the effect element are both pivotally connected to the rotary disk. The sun gear can drive all the effect elements to rotate at the same time, with simple structure and strong practicability. Further, the sun gear constitutes the first gear in the precision gear transmission component, and the effect element constitutes the second gear in the precision gear transmission component. In this way, it is possible to use only one first gear to guarantee the transmission accuracy between the sun gear and all the effect elements at the same time, which saves costs.

Further, the effect element includes a mounting base and an effect slice arranged in the mounting base. The picot edge is located on the mounting base. In this way, it is possible to only replace the effect slice with a simple structure to achieve different effects, and the mounting base becomes a universal part, which is more practical and can reduce production costs.

Further, the effect slice is a prism, a homogenizer, a gobo or a filter, which produces the effects of light splitting, light homogenizing, pattern projecting or color filtering, respectively.

### BRIEF DESCRIPTION OF THE DRAWINGS

FIG. 1 is an overall structure diagram of a precision gear transmission component according to the present invention.
FIG. 2 is a schematic diagram of an enlarged structure of part A in FIG. 1.
FIG. 3 is a schematic diagram of an exploded structure of a first gear according to the present invention.
FIG. 4 is a schematic diagram of a front structure of the first gear according to the present invention.
FIG. 5 is a schematic sectional view of the present invention along the A-A direction in FIG. 5.
FIG. 6 is a schematic sectional view of the present invention along the B-B direction in FIG. 5.
FIG. 7 is an overall structure diagram of a stage light according to the present invention.
FIG. 8 is an overall structure diagram of a swing effect element according to the present invention.
FIG. 9 is an overall structure diagram of a rotary effect element according to the present invention.

In the drawings:
100: precision gear transmission component; 200: first gear; 210: first wheel; 211: stationary shaft; 220: second wheel; 221: through hole; 230: adjusting screw; 2301: first screw; 2302: first screw head; 231: threaded hole; 232: adjusting hole; 2321: active gap; 240: locking screw; 2401: second screw; 2402: second screw head; 241: locking hole; 2411: locking section; 2412: penetrating section; 300: second gear; 400: driving mechanism; 410: drive shaft; 500: light head; 510: swing effect element; 511: swing arm; 512: driving wheel; 513: middle wheel; 520: rotary effect element; 521: rotary disk; 522: sun gear; 530: effect element; 531: mounting base; 532: effect slice; 533: picot edge; 600: supporting arm; 700: bottom box.

### DETAILED DESCRIPTION

The accompanying drawings are only for illustrative purposes and cannot be construed as limitations on the present invention. In order to better illustrate the embodiment, some parts of the accompanying drawings may be omitted, enlarged or shrunk, and do not represent the size of an actual product. For those skilled in the art, it is understandable that some well-known structures and their descriptions may be omitted in the accompanying drawings. The positional relationship illustrated in the accompanying drawings is only for illustrative purposes, and cannot be understood as a restriction on this patent.

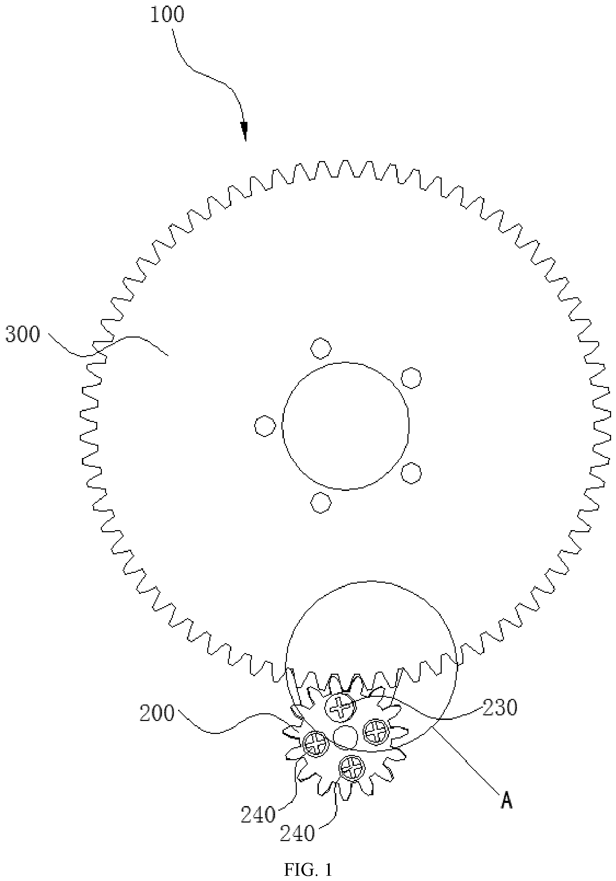

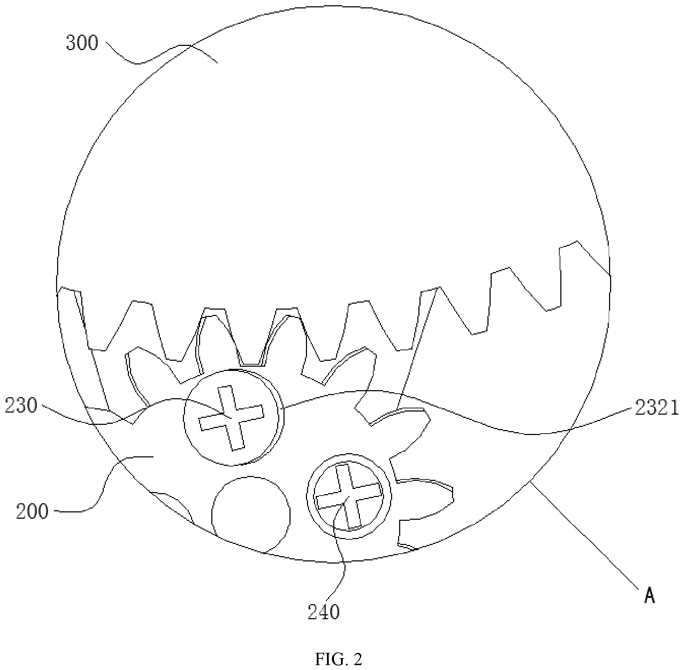

As shown in FIG. 1 to FIG. 3, the present invention provides a precision gear transmission component 100, which includes a first gear 200 and a second gear 300 which mesh with each other. The first gear 200 includes a first wheel 210 and a second wheel 220. Gear teeth of the first wheel 210 and gear teeth of the second wheel 220 are misaligned with each other and meshed with the same second gear 300.

The first gear 200 and the second gear 300 of the precision gear transmission component 100 mesh with each other, and the first gear 200 includes the first wheel 210 and the second wheel 220, the first wheel 210 or the second wheel 220 is rotated as needed, so that the gear teeth of the first wheel 210 and the gear teeth of the second wheel 220 are staggered with each other, until meshing accuracy of the first gear 200 and the second gear 300 reaches an optimal state, and then is locked, so as to realize a precision transmission of the precision gear transmission component 100. The precision gear transmission component 100 can be sold and used as a whole, or sold separately, and matched and adjusted by a user during use.

In a preferred embodiment of the present invention, a center of the first wheel 210 and a center of the second wheel 220 are pivotally connected to each other. When rotating the first wheel 210 or the second wheel 220, the first wheel 210 and the second wheel 220 will not slide and cause displacement, which is convenient for adjusting a misalignment angle between the gear teeth of the first wheel 210 and the gear teeth of the second wheel 220.

In a preferred embodiment of the present invention, the center of the first wheel 210 is fixed with a stationary shaft 211, the center of the second wheel 220 is provided with a through hole 221, and the second wheel 220 is sleeved on the stationary shaft 211. The second wheel 220 rotates around the stationary shaft 211.

In a preferred embodiment of the present invention, a misalignment angle between the first wheel 210 and the second wheel 220 is adjustable. During the work of the precision gear transmission component 100, if the first wheel 210 and the second wheel 220 of the first gear 200 are worn or the misalignment angle changes, the adjustment and correction can be performed again, the second wheel 220 is rotated to maintain the optimal misalignment angle between the first wheel 210 and the second wheel 220, ensuring the transmission accuracy of the precision gear transmission component 100. In addition, the misalignment angle between the first wheel 210 and the second wheel 220 is adjustable, the second gear 300 can be replaced at will, the misalignment angle between the first wheel 210 and the second wheel 220 can be readjusted, so that meshing accuracy of the first gear 200 and the second gear 300 reaches an optimal state.

In a preferred embodiment of the present invention, the first gear 200 further includes an adjusting part which adjust the misalignment angle between the first wheel 210 and the second wheel 220, and a locking part which locks the first wheel 210 and the second wheel 220 after adjustment. The misalignment angle between the first wheel 210 and the second wheel 220 can be adjusted by the adjusting part, and the first wheel 210 and the second wheel 220 after adjustment can be locked by the locking part, facilitating adjustment of the transmission accuracy of the precision gear transmission component 100 during use. Structures of the adjusting part and the locking part can have multiple types, as long as the first wheel 210 and the second wheel 220 can be adjusted and locked smoothly.

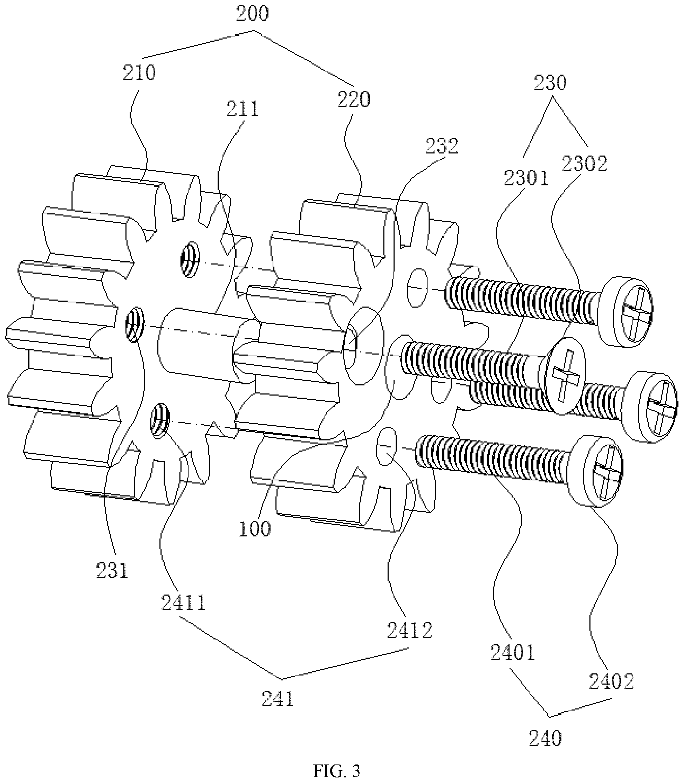

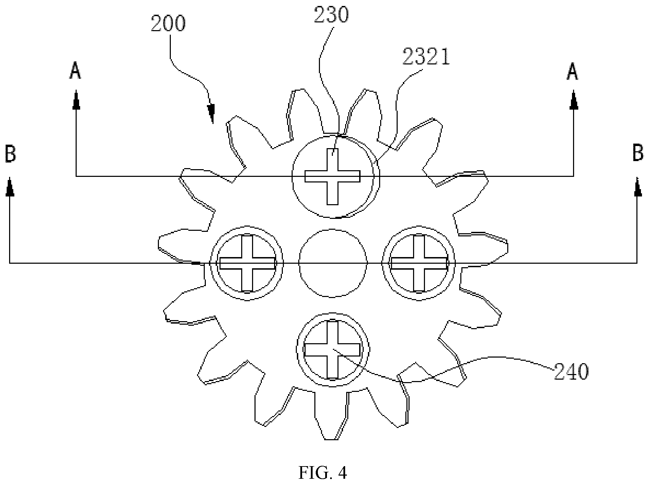

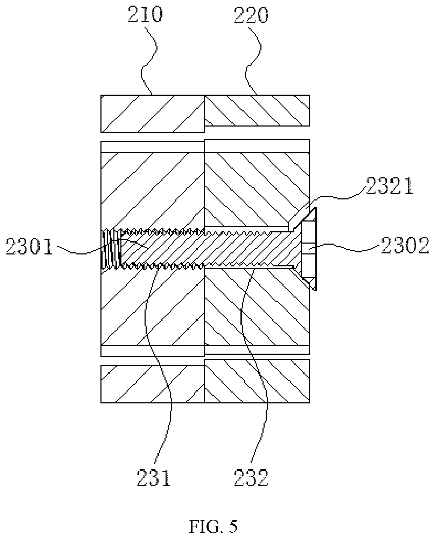

As shown in FIG. 3 to FIG. 5, in a preferred embodiment of the present invention, the adjusting part includes an adjusting screw 230, a threaded hole 231 arranged at the first wheel 210 and an adjusting hole 232 arranged at the second wheel 220. The adjusting screw 230 includes a first screw 2301 and a first screw head 2302. The first screw 2301 is connected to the threaded hole 231 and a width of the adjusting hole 232 is greater than a width of the first screw 2301. One side of the first screw head 2302 abuts against a side wall of the adjusting hole 232, and an active gap 2321 is provided between the other side of the first screw head 2302 and the side wall of the adjusting hole 232. During rotation of the adjusting screw 230, the first screw head 2302 drives the second wheel 220 to rotate, and the active gap 2321 increases or decreases accordingly. Since the first screw 2301 of the adjusting screw 230 is threadedly connected to the second wheel 220, when the adjusting screw 230 is screwed, a position of the adjusting screw 230 relative to the second wheel 220 will not change. Since the width of the adjusting hole 232 is greater than the width of the first screw 2301, and one side of the first screw head 2302 abuts against the side wall of the adjusting hole 232, and the active gap 2321 is provided between the other side of the first screw head 2302 and the side wall of the adjusting hole 232, when the adjusting screw 230 is screwed, the screw head will drive the first wheel 210 to rotate, thereby changing the misalignment angle between the first wheel 210 and the second wheel 220.

In a preferred embodiment of the present invention, a portion where the adjusting hole 232 abuts against the first screw head 2302 and/or a portion where the first screw head 2302 abuts against the adjusting hole 232 is an inclined plane. Using the inclined plane, the first wheel 210 can be driven to rotate more smoothly during screwing the adjusting screw 230.

Preferably, in the present embodiment, both the portion where the adjusting hole 232 abuts against the first screw head 2302 and the portion where the first screw head 2302 abuts against the adjusting hole 232 are the inclined plane.

In a preferred embodiment of the present invention, an end of the first screw head 2302 and/or an end of the adjusting hole 232 which is far away from the first wheel 210 has a frustum shape. It is easy to process, and during screwing the adjusting screw 230, the portion where the first screw head 2302 abuts against the adjusting hole 232 and/or the portion where the adjusting hole 232 abuts against the first screw head 2302 is always the inclined plane, which is easy to adjust.

Preferably, the adjusting screw 230 is a flat head screw.

In a preferred embodiment of the present invention, a center line of the threaded hole 231 and a center line of the adjusting hole 232 are staggered with each other. Since the threaded hole 231 is threadedly connected to the first screw 2301, and the width of the adjusting hole 232 is greater than the width of the first screw 2301, the width of the adjusting hole 232 must be greater than a width of the threaded hole 231. The center line of the threaded hole 231 and the center line of the adjusting hole 232 are staggered with each other, which can reduce a size of the adjusting hole 232, making it easier to process.

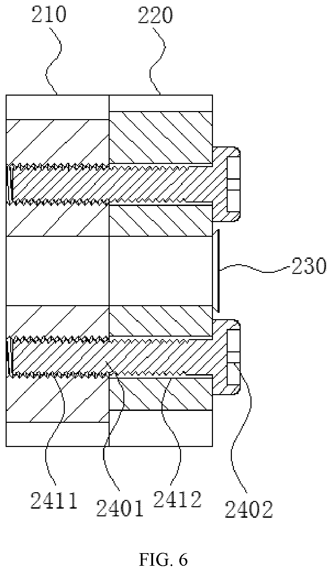

As shown in FIG. 3, FIG. 4 and FIG. 6, in a preferred embodiment of the present invention, the locking part includes a locking hole 241 penetrating the first wheel 210 and the second wheel 220, and a locking screw 240 inserted into the locking hole 241. After the misalignment angle between the first wheel 210 and the second wheel 220 is adjusted to an ideal position, by inserting the locking screw 240 into the locking hole 241 for locking, the second wheel 220 is prevented from rotating randomly.

In a preferred embodiment of the present invention, the locking hole 241 includes a locking section 2411 located in the first wheel 210, and a penetrating section 2412 located in the second wheel 220. The locking screw 240 includes a second screw 2401 and a second screw head 2402. The second screw 2401 is connected to the locking section 2411 and a width of the penetrating section 2412 is greater than a width of the second screw 2401. The second screw head 2402 abuts against a surface of the second wheel 220. Since the width of the penetrating section 2412 is greater than the width of the second screw 2401, the second wheel 220 can rotate relative to the first wheel 210. Since the second screw 2401 is connected to the locking section 2411, during rotation of the first wheel 210, a position of the locking screw 240 relative to the second wheel 220 remains unchanged. When the second screw head abuts 2402 against the surface of the second wheel 220, the first wheel 210 and the second wheel 220 can be locked to prevent the second wheel 220 from rotating randomly.

In a preferred embodiment of the present invention, the number of the locking part is at least two. The first wheel 210 and the second wheel 220 are locked by at least two of the locking parts.

In a preferred embodiment of the present invention, the number of the locking part is three, and the number of the adjusting part is one. The locking parts and the adjusting part are evenly distributed around a center of the first gear 200, and jointly fix the first wheel 210 and the second wheel 220, and the force is more balanced.

In a preferred embodiment of the present invention, any adjacent two of the second gear 300 are meshed for transmission by the first gear 200, or any adjacent two of the first gear 200 are meshed for transmission by the second gear 300. That is, there will not be two second gears 300 to mesh for transmission, but at least one first gear 200 in each step of the transmission to ensure that each step is precisely transmitted during the transmission, thereby ensuring the overall transmission accuracy.

In a preferred embodiment of the present invention, a diameter of the first gear 200 is smaller than a diameter of the second gear 300. Due to a complex structure of the first gear 200, the diameter of the first gear 200 is designed to be small, which facilitates production and assembly, and also facilitates the adjustment of the misalignment angle between the first wheel 210 and the second wheel 220.

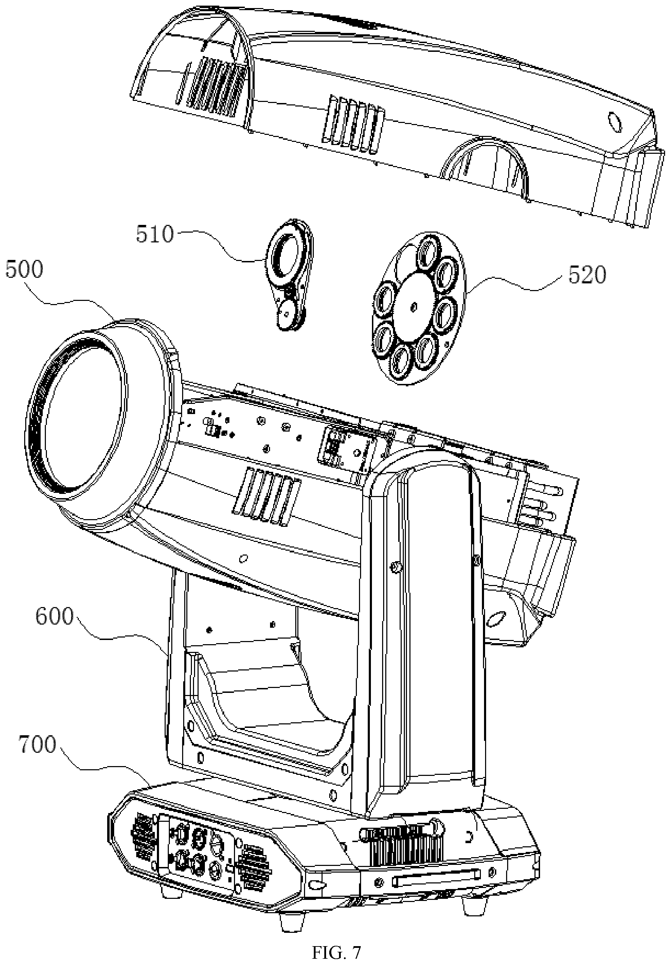

As shown in FIG. 7, the present invention further provides a stage light, which includes a driving mechanism 400 and any one of the above-described precision gear transmission component 100. The driving mechanism 400 is transmitted by the precision gear transmission component 100. Using the precision gear transmission component 100, rotation of the light head 500 or motion position of the effect element can be more accurate, and light control accuracy of the stage light can be improved. The precision gear transmission component 100 can also be applied to other positions in the stage light that require transmission.

Optionally, the driving mechanism 400 is a motor, preferably a servo motor.

In a preferred embodiment of the present invention, a transmission belt or a transmission gear is arranged between the driving mechanism 400 and the precision gear transmission component 100. The driving mechanism 400 transmits power to the precision gear transmission component 100 by the transmission belt or the transmission gear, in order to select a suitable installation position of the driving mechanism 400, and avoid limited space or inconvenient installation at the precision gear transmission component 100. The transmission belt or the transmission gear can be other transmission parts with high transmission accuracy. However, it should be noted that, regardless of the transmission accuracy of the transmission belt or the transmission gear, as long as the precision gear transmission component 100 is applied in the stage light, it belongs to the scope of protection of this application.

In a preferred embodiment of the present invention, the precision gear transmission component 100 is located in the light head 500. It drives various effect elements in the light head 500, or drives the light head 500 to rotate. For example, the light head 500 is pivotally connected to the pivot shaft, and can rotate around the pivot shaft, then the second gear 300 can be fixed to the pivot shaft, the first gear 200 is fixed to the drive shaft 410 of the driving mechanism 400, the driving mechanism 400 and the first gear 200 are both located inside the light head 500, the first gear 200 and the second gear 300 mesh with each other, which can drive the light head 500 to rotate around the pivot shaft.

In the present embodiment, the light head 500 is pivotally connected to the supporting arm 600 by the pivot shaft, the supporting arm 600 is pivotally connected to a bottom box 700 by another pivot shaft, and thereby the light head 500 can rotate in two directions.

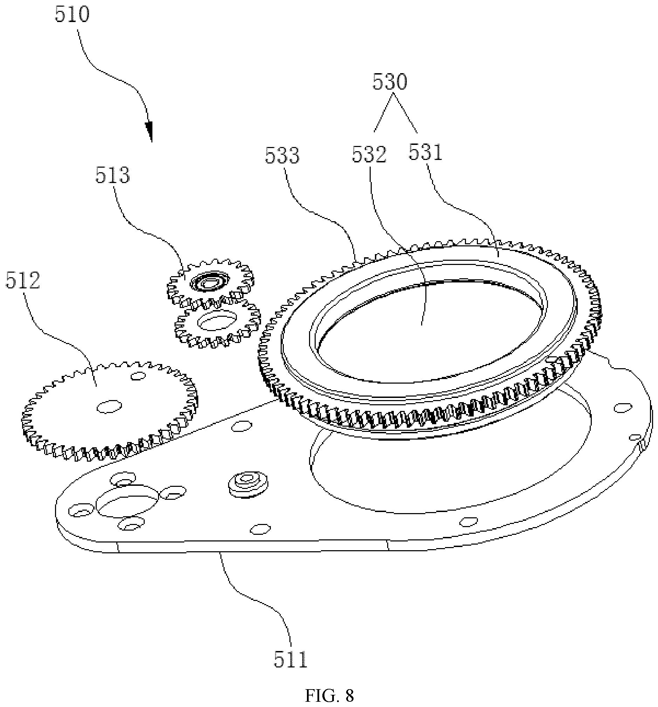

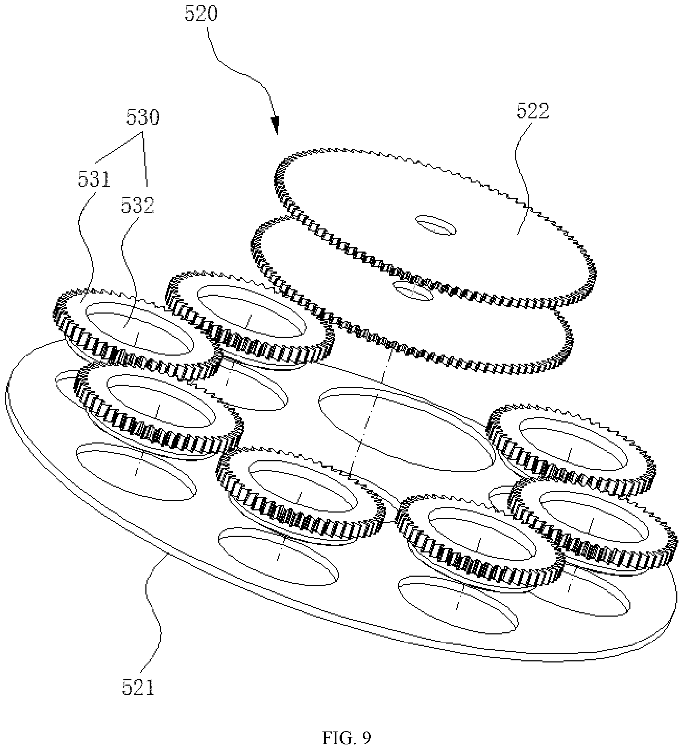

As shown in FIG. 8 and FIG. 9, in a preferred embodiment of the present invention, a swing effect element 510 is arranged in the light head 500. The swing effect element 510 includes a swing arm 511 and an effect element 530 arranged at the swing arm 511. Using the swing of the swing arm 511, the effect element 530 is cut in and out of a light path to produce or not produce light effects. And/or a rotary effect element 520 is provided in the light head 500, and the rotary effect element 520 includes a rotary disk 500 and an effect element 520 arranged at the rotary disk. Using the rotation of the rotary disk 521, different effect elements 530 can be switched to enter the light path to produce different light effects.

In a preferred embodiment of the present invention, the precision gear transmission component 100 is adopted between the swing arm 511 and the driving mechanism 400, thereby precisely controlling a swing angle of the swing arm 511, and/or the precision gear transmission component 100 is adopted between the rotary disk 521 and the driving mechanism 400 for transmission, thereby accurately controlling a rotation angle of the rotary disk 521, ensuring that a position where the effect element 530 on the swing arm 511 and/or the rotary disk 521 intersects the light path does not deviate.

In a preferred embodiment of the present invention, the effect element 530 is pivotally fixed, and the precision gear transmission component 100 is adopted between the effect element 530 and the driving mechanism 400 for transmission. Thereby, a rotation angle of effect element 530 is accurately controlled, so that a desired pattern can be projected in an accurate direction.

The driving mechanism 400 can drive the effect element 530 to rotate in many ways. In a preferred embodiment of the present invention, the effect element 530 is provided with a picot edge 533, which constitutes the first gear 200 or the second gear 300 in the precision gear transmission component 100. The effect element 530 is driven by the picot edge 533, and the effect element 530 having the picot edge 533 is used to constitute the first gear 200 or the second gear 300 in the precision gear transmission component 100, which reduces transmission steps, so as to control the rotation angle of the effect element 530 more accurately.

As shown in FIG. 8, in a preferred embodiment of the present invention, a swing effect element 510 is provided in the light head 500. The swing effect element 510 includes a swing arm 511. The swing arm 511 is provided with a pivot shaft. A driving wheel 512 is provided on the pivot shaft. The driving wheel 512 meshes with the effect element 530 by the middle wheel 513. By arranging the middle wheel 513, it is possible to transmit between the driving wheel 512 and the effect element 530, reducing a size of the driving wheel 512, which is convenient for saving space. The driving mechanism 400 can use the middle wheel 513 to transmit force to the effect element 530 by driving the driving wheel 512. In this embodiment, the driving mechanism 400 is fixed to the driving wheel on drive shaft 410 to drive the driving wheel 512.

In a preferred embodiment of the present invention, the middle wheel 513 constitutes the first gear 200 in the precision gear transmission component 100. The driving wheel 512 and the effect element 530 constitute the second gear 300 in the precision gear transmission component 100. In this way, it is possible to use only one first gear 200 to guarantee the transmission accuracy between the middle wheel 513 and the driving wheel 512 and the transmission accuracy between the middle wheel 513 and the effect element 530 at the same time, which saves costs.

As shown in FIG. 9, in a preferred embodiment of the present invention, a rotary effect element 520 is provided in the light head 500. The rotary effect element 520 includes a rotary disk 521, a sun gear 522 arranged at a center of the rotary disk 521 and an effect element 530 arranged around the sun gear 522 and meshing with the sun gear 522. The sun gear 522 and the effect element 530 are both pivotally connected to the rotary disk 521. The sun gear 522 can drive all the effect elements 530 to rotate at the same time, with simple structure and strong practicability. In a preferred embodiment of the present invention, the sun gear constitutes the first gear 200 in the precision gear transmission component 100. The effect element 530 constitutes the second gear 300 in the precision gear transmission component 100. In this way, it is possible to use only one first gear 200 to guarantee the transmission accuracy between the sun gear 522 and all the effect elements 530 at the same time, which saves costs. The driving mechanism 400 can transmit power to the effect element 530 by driving the sun gear 522. In the present embodiment, the driving mechanism 400 drives the sun gear 522 by a synchronization belt, and the sun gear 522 is arranged concentrically with a synchronized wheel.

In a preferred embodiment of the present invention, the effect element 530 includes a mounting base 531 and an effect slice 532 arranged in the mounting base 531. The picot edge 533 is located on the mounting base 531. In this way, it is possible to only replace the effect slice 532 with a simple structure to achieve different effects, and the mounting base 531 becomes a universal part, which is more practical and can reduce production costs. In other embodiments, for the case where the effect slice 532 is less replaced, the picot edge 533 can also be directly arranged around the effect slice 532, without the mounting base 531.

In a preferred embodiment of the present invention, the effect slice 532 is a prism, a homogenizer, a gobo or a filter, which produces the effects of light splitting, light homogenizing, pattern projecting or color filtering, respectively. The filter can be an ordinary color filter, also can be a CMY filter or an RGB filter, and also can be a color temperature filter or a color rendering index filter, and a Wood filter or heat filter. As long as it can filter light, it belongs to the filter mentioned in this application.

Obviously, the above-mentioned embodiments of the present invention are only examples to clearly illustrate the present invention, and are not intended to limit the implementation of the present invention. For those ordinarily skilled in the art, other changes or variations in different forms can be made on the basis of the above description. It is not necessary and cannot be an exhaustive list of all implementations herein. Any modification, equivalent replacement and improvement made within the spirit and principle of the present invention shall be included in the scope of protection claimed by the present invention.

## Claims

1. A precision gear transmission component, **characterized in that**, the precision gear transmission component comprises a first gear (200) and a second gear (300) which mesh with each other, the first gear (200) comprises a first wheel (210) and a second wheel (220), gear teeth of the first wheel (210) and gear teeth of the second wheel (220) are misaligned with each other and meshed with the same second gear (300).

2. The precision gear transmission component according to claim 1, wherein a center of the first wheel (210) and a center of the second wheel (220) are pivotally connected to each other.

3. The precision gear transmission component according to claim 2, wherein the center of the first wheel (210) is fixed with a stationary shaft (211), the center of the second wheel (220) is provided with a through hole (221), and the second wheel (220) is sleeved on the stationary shaft (211).

4. The precision gear transmission component according to claim 1, wherein a misalignment angle between the first wheel (210) and the second wheel (220) is adjustable.

5. The precision gear transmission component according to claim 4, wherein the first gear (200) further comprises an adjusting part which adjusts the misalignment angle between the first wheel (210) and the second wheel (220), and a locking part which locks the first wheel (210) and the second wheel (220) after adjustment.

6. The precision gear transmission component according to claim 5, wherein the adjusting part comprises an adjusting screw (230), a threaded hole (231) located at the first wheel (210) and an adjusting hole (232) located at the second wheel (220), the adjusting screw (230) comprises a first screw (2301) and a first screw head (2302), the first screw (2301) is connected to the threaded hole (231) and a width of the adjusting hole (232) is greater than a width of the first screw (2301), one side of the first screw head (2302) abuts against a side wall of the adjusting hole (232), an active gap (2321) is provided between the other side of the first screw head (2302) and the side wall of the adjusting hole (232), during rotation of the adjusting screw (230), the first screw head (2302) drives the second wheel (220) to rotate, and the active gap (2321) increases or decreases accordingly.

7. The precision gear transmission component according to claim 6, wherein a portion where the adjusting hole (232) abuts against the first screw head (2302) and/or a portion where the first screw head (2302) abuts against the adjusting hole (232) is an inclined plane.

8. The precision gear transmission component according to claim 7, wherein an end of the first screw head (2302) and/or an end of the adjusting hole (232) which is far away from the first wheel (210) has a frustum shape.

9. The precision gear transmission component according to claim 6, wherein a center line of the threaded hole (231) and a center line of the adjusting hole (232) are staggered with each other.

10. The precision gear transmission component according to claim 5, wherein the locking part comprises a locking hole (241) penetrating the first wheel (210) and the second wheel (220), and a locking screw (240) inserted into the locking hole (241).

11. The precision gear transmission component according to claim 10, wherein the locking hole (241) comprises a locking section (2411) located in the first wheel (210), and a penetrating section (2412) located in the second wheel (220), the locking screw (240) comprises a second screw (2401) and a second screw head (2402), the second screw (2401) is connected to the locking section (2411) and a width of the penetrating section (2412) is greater than a width of the second screw (2401), and the second screw head (2402) abuts against a surface of the second wheel (220).

12. The precision gear transmission component according to claim 5, wherein number of the locking part is at least two.

13. The precision gear transmission component according to claim 12, wherein the number of the locking part is three, number of the adjusting part is one, and the locking parts and the adjusting part are evenly distributed around a center of the first gear (200).

14. The precision gear transmission component according to claim 1, wherein any adjacent two of the second gear (300) are meshed for transmission by the first gear (200), or any adjacent two of the first gear (200) are meshed for transmission by the second gear (300).

15. The precision gear transmission component according to claim 1, wherein a diameter of the first gear (200) is smaller than a diameter of the second gear (300).

16. A stage light, **characterized in that**, the stage light comprises a driving mechanism (400) and the precision gear transmission component (100) according to any one of claims 1 to 15, and the driving mechanism (400) is transmitted by the precision gear transmission component (100).

17. The stage light according to claim 16, wherein a transmission belt or a transmission gear is further provided between the driving mechanism (400) and the precision gear transmission component (100).

18. The stage light according to claim 16, wherein the precision gear transmission component (100) is located in the light head (500).

19. The stage light according to claim 18, wherein a swing effect element (510) is provided in the light head (500) and the swing effect element (510) comprises a swing arm (511) and an effect element (530) located at the swing arm (511), and/or a rotary effect element (520) is provided in the light head (500) and the rotary effect element (520) comprises a rotary disk (521) and an effect element (530) located at the rotary disk (521).

20. The stage light according to claim 19, wherein the precision gear transmission component (100) is adopted between the swing arm (511) and the driving mechanism (400) for transmission, and/or the precision gear transmission component (100) is adopted between the rotary disk (521) and the driving mechanism (400) for transmission.

21. The stage light according to claim 19, wherein the effect element (530) is pivotally fixed, and the precision gear transmission component (100) is adopted between the effect element (530) and the driving mechanism (400) for transmission.

22. The stage light according to claim 21, wherein the effect element (530) is provided with a picot edge (533), which constitutes the first gear (200) or the second gear (300) in the precision gear transmission component (100).

23. The stage light according to claim 22, wherein the swing effect element (510) is provide in the light head (500), the swing effect element (510) comprises the swing arm (511), the swing arm (511) is provided with a pivot shaft, a driving wheel (512) is provided on the pivot shaft, and driving wheel (512) meshes with the effect element (530) by the middle wheel (513).

24. The stage light according to claim 23, wherein the middle wheel (513) constitutes the first gear (200) in the precision gear transmission component (100), and the driving wheel (512) and the effect element (530) constitute the second gear (300) of the precision gear transmission component (100).

25. The stage light according to claim 22, wherein a rotary effect element (520) is provided in the light head (500), the rotary effect element (520) comprises a rotary disk (521), a sun gear (522) arranged in a center of the rotary disk (521) and an effect element (530) arranged around the sun gear (522) and meshing with the sun gear (522), and the sun gear (522) and the effect element (530) are both pivotally connected to the rotary disk (521).

26. The stage light according to claim 25, wherein the sun gear constitutes the first gear (200) in the precision gear transmission component (100), and the effect element (530) constitutes the second gear (300) in the precision gear transmission component (100).

27. The stage light according to claim 22, wherein the effect element (530) comprises a mounting base (531) and an effect slice (532) arranged in the mounting base (531), and the picot edge (533) is located on the mounting base (531).

28. The stage light according to claim 27, wherein the effect slice (532) is a prism, a homogenizer, a gobo or a filter.
